# EUROPEAN PATENT APPLICATION

(11) **EP 4 738 295 A1**
(43) Date of publication of application: **06.05.2026**
(21) Application number: 25211662.9
(22) Date of filing: 28.10.2025
(51) Int. Cl.: G07C 9/27, H04L 9/40, G07C 9/00

(54) **ENABLING THE PROVISION OF CREDENTIALS FOR ELECTRONIC LOCKS**

(30) Priority: 31.10.2024 SE 2451076
(71) Applicant: ASSA ABLOY AB, 107 23 Stockholm (SE)
(72) Inventor: HAMSTRÖM, Mikael, Norrköping (SE); LINDROOS, Kristoffer, Halmstad (SE); PERSSON, Maria, Åled (SE)
(74) Representative: Kransell & Wennborg KB

(57) **Abstract**

It is provided a method for enabling the provision of credentials for electronic locks (12). The method comprises: receiving (40) an access provision request comprising an identifier of a credential carrier (2); obtaining (46) an access list; transmitting (48), by an access control server (3), an access preparation message (24) to an access provision server (4), the access preparation message comprising the access list ;transmitting (50) an access list message (26) comprising the access list and/or an identifier associated with the access list, to the credential carrier (2); receiving (144) a credential request (28), the credential request (28) comprising the access list and/or the identifier associated with the access list; obtaining (145), at least one credential corresponding to the access list; and providing (146) a credential message (30), comprising the at least one credential corresponding to the access list, to the credential carrier (2).

## Description

### TECHNICAL FIELD

The present disclosure relates to the field of electronic locks and in particular to enabling the provision of credentials for electronic locks.

### BACKGROUND

Electronic access control systems are commonly employed to secure physical spaces, such as buildings, rooms, or other restricted areas. Some of these systems use electronic locks that interact with digital credentials provided using smartphones or other portable electronic devices. The credentials are often issued by a centralised system, which manages the process of creating, distributing, and revoking access rights.

Such centralised systems in the prior art may work well for situations where a single party is responsible for managing access rights. However, there are more complicated situations where various parties are responsible for different aspects of the access control.

It would be of great benefit if access control systems could support multiple parties having different responsibilities.

### SUMMARY

One object is to support electronic access control systems where multiple parties have different responsibilities.

According to a first aspect, it is provided a method for enabling the provision of credentials for electronic locks. The method is performed by a system comprising an access control server and an access provision server, wherein the access provision server is distinct from the access control server. The method comprises: receiving, by the access control server, an access provision request comprising an identifier of a credential carrier; obtaining, by the access control server, an access list indicating at least one access right for a restricted physical space to be provided to the credential carrier; transmitting, by the access control server, an access preparation message to the access provision server, the access preparation message comprising the access list; transmitting, by the access control server, an access list message comprising the access list and/or an identifier associated with the access list, to the credential carrier; receiving, by the access provision server, from the credential carrier, a credential request, the credential request comprising the access list and/or the identifier associated with the access list; obtaining, by the access provision server, at least one credential corresponding to the access list; and providing, by the access provision server, a credential message, comprising the at least one credential corresponding to the access list, to the credential carrier.

According to a second aspect, it is provided a method for enabling the provision of credentials for electronic locks. The method is performed by an access control server. The method comprises: receiving an access provision request comprising an identifier of a credential carrier; obtaining an access list indicating at least one access right for a restricted physical space to be provided to the credential carrier; transmitting an access preparation message to an access provision server being distinct from the access control server, the access preparation message comprising the access list; and transmitting an access list message comprising the access list and/or an identifier associated with the access list to the credential carrier.

In the obtaining the access list, the access list may be obtained based on the identifier of the credential carrier.

The method may further comprise: receiving lock data for at least one lock associated with an access right of the access list.

The lock data may comprise information whether the lock is associated with the access control server.

The access provision request may further comprise a space indicator being associated with a restricted physical space to be accessed by the credential carrier; the access list comprises at least one access right for accessing the restricted physical space. In this case, the method further comprises: transmitting an authentication data message, comprising authentication data, to the credential carrier; receiving an access right request comprising the authentication data; and authenticating the access right request by verifying the authentication data of the access right request.

The obtaining the access list may further comprise obtaining, the access list based on the space indicator, wherein the access list comprises access rights for a plurality of electronic locks that need to be unlocked for access to the restricted physical space associated with the space indicator.

The transmitting the authentication data message may comprise providing the authentication data message as a text message or an e-mail to the credential carrier.

The authenticating the access right request may comprise verifying that it is the first time that the authentication data is used for authentication of an access right request by the access control server.

According to a third aspect, it is provided an access control server for enabling the provision of credentials for electronic locks. The access control server comprises: processing circuitry; and memory circuitry storing instructions that, when executed by the processing circuitry, cause the access control server to: receive an access provision request comprising an identifier of a credential carrier; obtain an access list indicating at least one access right for a restricted physical space to be provided to the credential carrier; transmit an access preparation message to an access provision server being distinct from the access control server, the access preparation message comprising the access list; and transmit an access list message comprising the access list and/or an identifier associated with the access list to the credential carrier.

According to a fourth aspect, it is provided a computer program for enabling the provision of credentials for electronic locks. The computer program comprises computer program code which, when executed on a access control server causes the access control server to receive an access provision request comprising an identifier of a credential carrier; obtain an access list indicating at least one access right for a restricted physical space to be provided to the credential carrier; transmit an access preparation message to an access provision server being distinct from the access control server, the access preparation message comprising the access list; and transmit an access list message comprising the access list and/or an identifier associated with the access list to the credential carrier.

According to a fifth aspect, it is provided a computer program product comprising a computer program according to the fourth aspect and a computer readable means comprising non-transitory memory in which the computer program is stored.

According to a sixth aspect, it is provided a method for enabling the provision of credentials for electronic locks. The method is by an access provision server. The method comprises: receiving an access preparation message from an access control server being distinct from the access provision server, the access preparation message comprising an access list indicating at least one access right to be provided to a credential carrier; receiving, from the credential carrier, a credential request, the credential request comprising the access list and/or an identifier associated with the access list; and obtaining at least one credential corresponding to the access list; and providing a credential message, comprising the at least one credential corresponding to the access list, to the credential carrier.

The obtaining at least one credential may comprise generating each one of the at least one credential based on secret data that is shared with the lock that is associated with the credential.

The method may further comprise: receiving lock data from the credential carrier.

According to a seventh aspect, it is provided an access provision server for enabling the provision of credentials for electronic locks. The access provision server comprises: processing circuitry; and memory circuitry storing instructions that, when executed by the processing circuitry, cause the access provision server to: receive an access preparation message from an access control server being distinct from the access provision server, the access preparation message comprising an access list indicating at least one access right to be provided to a credential carrier; receive, from the credential carrier, a credential request, the credential request comprising the access list and/or an identifier associated with the access list; obtain at least one credential corresponding to the access list; and provide a credential message, comprising the at least one credential corresponding to the access list, to the credential carrier.

According to an eighth aspect, it is provided a computer program for enabling the provision of credentials for electronic locks. The computer program comprises computer program code which, when executed on a access provision server causes the access provision server to: receive an access preparation message from an access control server being distinct from the access provision server, the access preparation message comprising an access list indicating at least one access right to be provided to a credential carrier; receive, from the credential carrier, a credential request, the credential request comprising the access list and/or identifier associated with the access list; obtain at least one credential corresponding to the access list; and provide a credential message, comprising the at least one credential corresponding to the access list, to the credential carrier.

According to a ninth aspect, it is provided a computer program product comprising a computer program according to the eighth aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram showing an environment in which embodiments presented herein can be applied;
Fig 2 is a schematic diagram illustrating the concept of multiple accessible physical spaces and restricted physical spaces;
Figs 3A-C are swimlane diagrams illustrating embodiments of methods for enabling the provision of credentials for electronic locks;
Fig 4 is a schematic diagram illustrating components of the access control server and the access provision server of Fig 1; and
Fig 5 shows one example of a computer program product 90 comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, credentials for electronic locks are managed using distinct servers for access control and credential provisioning. The access control server initiates the process by sending a request to the access provision server, which obtains and prepares the relevant credentials based on an access list, for access to one or more electronic locks. These credentials are transmitted to the credential carrier (e.g. in the form of a smartphone), ensuring that the access rights correspond to the intended identifier, such as a specific user or device. By separating the access control server and the access provision server, multiple access control servers can be associated with a single access provision server. Each access control server can be coupled to a separate organisation, thereby enhancing scalability and flexibility.

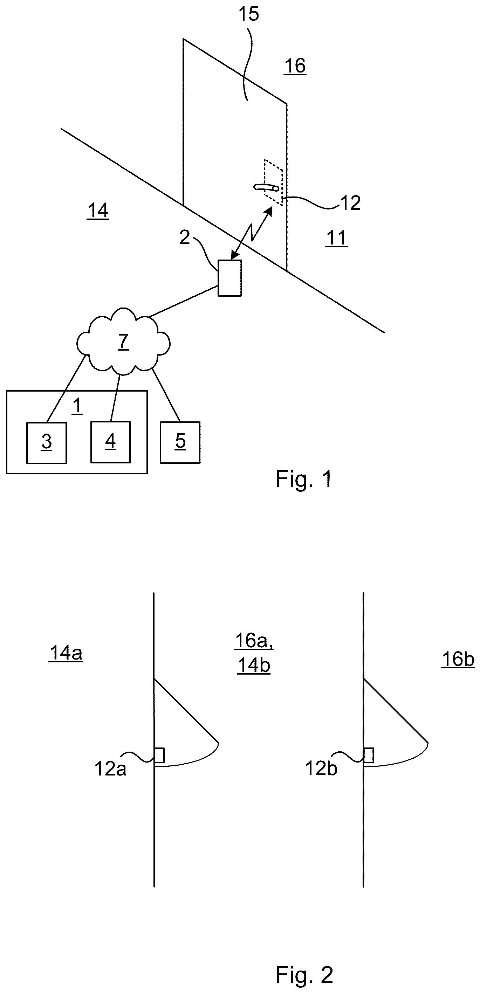

Fig 1 is a schematic diagram showing an environment in which embodiments presented herein can be applied. Access to a restricted physical space 16 is restricted by a physical barrier 15 which is selectively unlockable. The physical barrier 15 stands between the restricted physical space 16 and an accessible physical space 14. The barrier 15 can be a door, gate, hatch, cabinet door, drawer, window, etc. In order to control access to the restricted physical space 16, by selectively unlocking the barrier 15, an electronic lock 12 is provided.

The electronic lock 12 can be provided in the structure 11 surrounding the barrier 15 (as shown) or the electronic lock 12 can be provided in the barrier 15 itself (not shown). The electronic lock 12 is controllable to be in a locked state or in an unlocked state. The electronic lock 12 can be offline, i.e. it does not have its own ability to communicate with servers of the access control system.

A user carries a credential carrier 2. The credential carrier 2 can contain one or more credentials that function as electronic keys for the electronic lock 12. The credential carrier 2 can be in any suitable format that allows the electronic lock 12 to communicate (wirelessly or conductively) with the credential carrier 2 to evaluate its credentials to determine whether to grant access. For instance, the electronic key 2 can be in the form of a smartphone, wearable device, a key card, a hybrid mechanical/electronic key, etc. It is to be noted that while only one credential carrier 2 and one electronic lock 12 are shown in Fig 1, there can be any suitable number of credential carriers 2 and electronic locks 12. Optionally, the credential carrier 2 comprises a dedicated app (application) for communicating with the electronic lock 12 for gaining access to the restricted physical space 16.

The credential carrier 2 contains communication capabilities to connect to communication network 7. The communication network 7 can be a wide area network, such as the Internet, to which the credential carrier 2 can connect e.g. via Wi-Fi (e.g. any of the IEEE 802.11x standards) or a cellular network, e.g. LTE (Long Term Evolution), next generation mobile networks (fifth generation, 5G), UMTS (Universal Mobile Telecommunications System) utilising W-CDMA (Wideband Code Division Multiplex), etc. The credential carrier 2 also contains communication capabilities for connecting to the electronic lock 12, e.g. using Bluetooth, BLE (Bluetooth Low Energy), NFC (Near-Field Communication), etc.

An access control server 3 is provided connected to the communication network 7. The access control server 3 is responsible for mapping restricted physical spaces to users, e.g. homeowners. The access control server 3 is also responsible for managing access lists, where each access list is a set of access rights (i.e. electronic locks to open). Each access list can be associated with a restricted physical space, with a particular user (e.g. homeowner), or with a particular organisation (e.g. care organisation). There can be multiple access control servers 3.

An access provision server 4 is also provided connected to the communication network 7. The access provision server 4 is responsible for providing credentials to credential carriers 2, or more specifically, for providing credentials to the dedicated app of the credential carrier 2.

A system 1 can be defined comprising at least one access control server 3 and an access provision server 4.

An external system 5, e.g. in the form of an alarm receiving centre (ARC) system is also provided connected to the communication network 7. The ARC is a facility that monitors various types of alarms, e.g. alarms from wearable device for senior citizens to signal a personal medical emergency, fire alarm, etc. The personnel at the ARC can determine whether to dispatch someone to address the emergency, and if so, who to dispatch. According to some embodiments presented herein, the external system 5 can request temporary access for the dispatched person when it is needed to access the restricted physical space 16 to handle the emergency situation.

Fig 2 is a schematic diagram illustrating the concept of multiple accessible physical spaces and restricted physical spaces. In this example, there are two electronic locks 12a, 12b. In relation to the first electronic lock 12a, there is a first accessible physical space 14a and a first restricted physical space 16a. In relation to the second electronic lock 12b, there is a second accessible physical space 14b and a second restricted physical space 16b. It is noted that the first restricted physical space 16a is in fact the same as the second accessible space 14b. Hence, an accessible physical space can be a restricted physical space in itself, since there can be locks on either side.

This situation can e.g. be one where the second restricted physical space 16b is a flat and the first restricted physical space 16a is block of flats. The first electronic lock 12a then protects entry to the block of flats and the second electronic lock 12b protects entry to a particular flat. If a person is to be provided with credentials to enter the flat from the street, two credentials are needed - one for each one of the electronic locks 12a, 12b. These two credentials can then be represented by an access list.

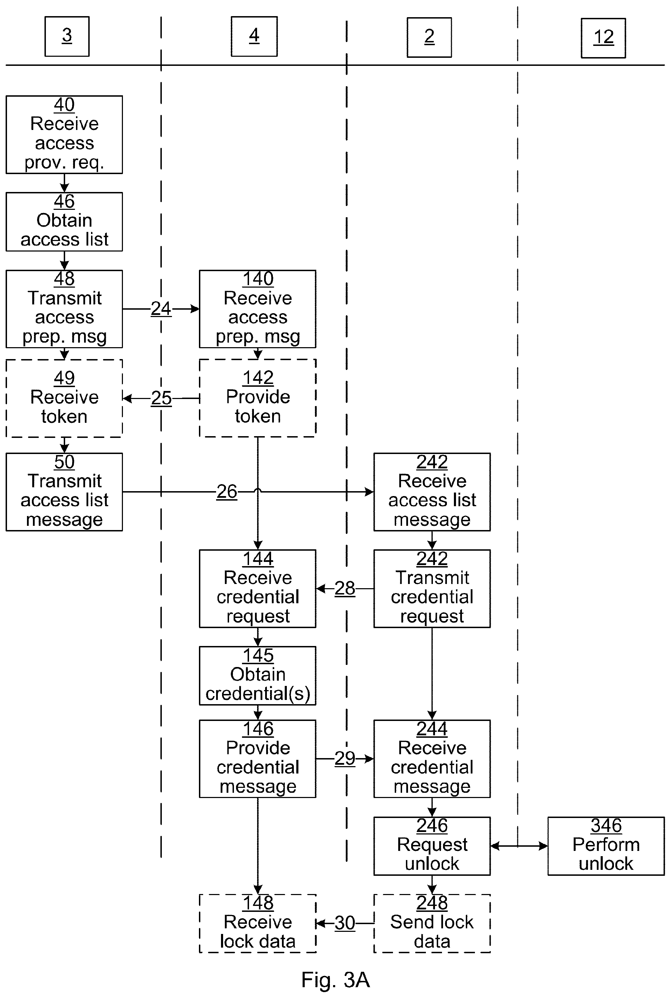

Figs 3A-C are swimlane diagrams illustrating embodiments of methods for enabling the provision of credentials for electronic locks. The swimlane diagrams can be considered to comprise a flow chart for methods by the access control server 3 in the leftmost swimlane, and a flow chart for methods by the access provision server 4 in the second swimlane from the left. Actions for the credential carrier 2 and electronic lock 12 are also shown, as well as communication between the various entities. It is to be noted that the access provision server is distinct from the access control server.

In a *receive access prov(ision) req(uest)* step 40, the access control server 3 receives an access provision request comprising an identifier of a credential carrier 2 to which credentials are requested to be provided. The access provision request can be received from the credential carrier 2 or from an external entity, such as the external system 5. Optionally, the access provision request further comprises a space indicator being associated with a restricted physical space to be accessed by the credential carrier 2.

In an *obtain access list* step 46, the access control server 3 obtains an access list indicating at least one access right for a restricted physical space to be provided to the credential carrier 2. Optionally, the access list is obtained based on the identifier of the credential carrier 2. Each access right can correspond to an electronic lock or a group of electronic locks.

When the access provision request comprises the space indicator, the access list comprises at least one access right needed for accessing the restricted physical space.

In a *transmit access prep(aration) msg(message)* step 48, the access control server 3 transmits an access preparation message 24 to the access provision server. The access preparation message comprises the access list. Optionally, the access control server also obtains an identifier associated with the access list. This identifier can be generated by the access control server 3 and communicated to the access provision server 4, or vice versa.

In a *receive access preparation message* step 140, the access provision server 4 receives the access preparation message 24 from the access control server. As explained above, the access provision server optionally also obtains the identifier associated with the access list.

Optionally, the access provision server 4, verifies for each access right of the access list, that the access control server 3 is authorised to be provided that access right. This can be checked by consulting a database where, for each access right, it is indicated all (zero or more) access control servers 3 that are authorised to gain such an access right. When one or more access rights do not pass the verification, these access rights are removed from the access list prior to subsequent processing. Alternatively, when there is at least one access right on the access list that does not pass the verification, the method ends, optionally after sending a message to the access control server informing of the failed access right verification.

Optionally, the access provision server 4 generates a token for the access list, optionally also based on a session identifier to prevent a replay attack. The session identifier is any suitable data item that is (reasonably) unique for the instance of preparing the access list. The cryptographic token can e.g. comprise a cryptographic signature of the access list and optionally the session identifier, generated by the access provision server 4.

In an optional *provide token* step 142, the access provision server 4 provides the cryptographic token 25 to the access control server 3. In an optional receive token step 49, the access control server 3 receives the cryptographic token 25 from the access provision server 4.

This step can e.g. be implemented by the access provision server 4 generating each one of the at least one credential based on secret data that is shared with the electronic lock that is associated with the credential.

In a *transmit access list message* step 50, the access control server 3 transmits an access list message 26 comprising the access list and/or the identifier associated with the access list, to the credential carrier 2. Optionally, the access list message 26 comprises the cryptographic token generated by the access provision server 4. The token allows verification by the access provision server 4 that the access list is one that the access provision server 4 has previously received from the access control server 3. The transmission of the access list message can be in response to a request from the credential carrier 2.

In a *receive access list message* step 242, the credential carrier 2 receives the access list message 26 from the access control server 3.

In a *transmit credential request* step 242, the credential carrier 2 transmits a credential request 28 to the access provision server 4. The credential request implies that the credential carrier 2 asks the access provision server 4 for credentials of the access list included or referred to in the access list message 26. The way that the credential carrier 2 asks for the access list is by including the access list and/or the identifier associated with the access list in the credential request 28. When the access list message 26 contains the cryptographic token, the cryptographic token can be used as the access list identifier.

In a *receive credential request* step 144, the access provision server 4 receives, from the credential carrier 2, the credential request 28. As explained above, the credential request comprises the access list and/or the identifier associated with the access list. When the credential request 28 comprises the cryptographic token, the access provision server 4 can verify that the access list is the one that was included in the access preparation message 24 from the access control server 3, preventing a rogue actor from modifying the access list to add additional requested access rights.

In an *obtain credential(s)* step 145, the access provision server 4 obtains at least one credential corresponding to the access list.

In a *provide credential message* step 146, the access provision server 4 provides a credential message 29 to the credential carrier 2. The credential message 29 comprises the at least one credential corresponding to the access list.

In a *receive credential message* step 244, the credential carrier 2 receives the credential message 29 comprising the at least one credential. The credential carrier 2 is now ready to approach an electronic lock 12 to request unlocking. This includes receiving data about the electronic lock 12 so that an appropriate credential in the access list can be selected for requesting unlock.

In a *request unlock* step 246, the credential carrier 2 communicates with the electronic lock 12 to request that the electronic lock 12 is unlocked. This unlock request is based on a credential that is usable for the electronic lock 12 in question. The credential was received in the credential message 29.

In a *perform unlock* step 346, the electronic lock 12 unlocks itself based on verifying that at least one credential held by the credential carrier 2 is valid for unlocking the electronic lock 12. Optionally, when communicating with the credential carrier 2 for the unlock operation, the electronic lock 12 also provides current lock data (e.g. firmware version, battery level, access logs (of successful and/or unsuccessful access attempts) etc.) to the credential carrier 2.

In an optional *send lock data* step 248, the credential carrier 2 sends lock data received from the electronic lock 12 to the access provision server 4.

In an optional *receive lock data* step 148, the access provision server 4 receives the lock data from the credential carrier 2. In this way, the access provision server 4 is provided with up-to-date lock data from when the credential carrier 2 interacted with the electronic lock 12.

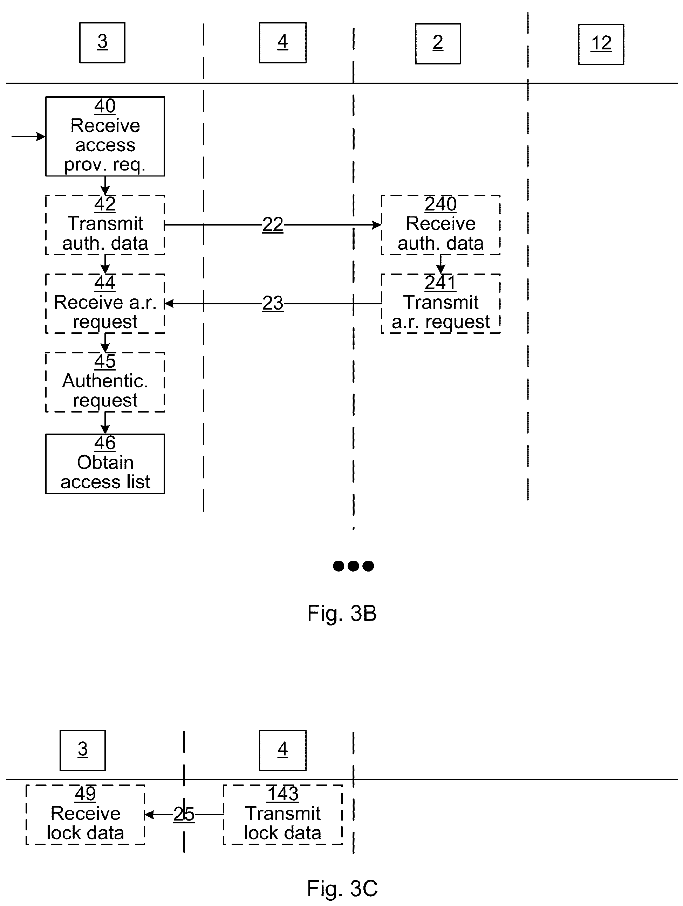

Looking now to Fig 3B, only new or modified steps compared to what is disclosed in Fig 3A is shown. The scenario illustrated by Fig 3B can e.g. relate to providing temporary access, such as in an emergency situation.

In this case, the *receive access provision request* step 40 can comprise receiving the access provision request from an external system 5 (see Fig 1).

In an optional *transmit auth(entication) data* step 42, the access control server 3 transmits an authentication data message 22, comprising authentication data, to the credential carrier 2. The authentication data can be in the form of a string, e.g. a cryptographic token. The transmission of the authentication data message does not need to occur to the dedicated app of the credential carrier 2. For instance, the transmitting the authentication data message can be based on providing the authentication data message 22 as a text message or an e-mail to the credential carrier 2. The authentication data message 22 can comprise a deep link, which, when activated by the user of the credential carrier 2, links to a dedicated app (also known as application) on credential carrier 2. If the dedicated app is not already installed on the credential carrier 2, the deep link can cause the credential carrier 2 to present an option to download and install the dedicated app on the credential carrier 2.

In an optional *receive authentication data* step 240, the credential carrier 2 receives the authentication data message 22 from the access control server 3. When applicable, the user of the credential carrier 2 activates the deep link in the authentication data message, causing the dedicated app (optionally after installing the dedicated app) to receive the authentication data contained in the authentication data message 22.

In an optional *transmit a(ccess) r(ight) request* step 241, the credential carrier 2 transmits an access right request 23 to the access control server 3. The access right request 23 comprises the authentication data. This step can be performed by the dedicated app in the credential carrier 2. The communication between the dedicated app of the credential carrier 2 and the access control server 3 can occur via a gateway device (not shown) that the credential carrier 2 is configured to connect to. The gateway device can then relay communication to the appropriate access control server 3, to thereby enable the communication between the credential carrier 2 and the access control server 3. In this way, it is sufficient that the dedicated app is configured to communicate with the gateway device.

In an optional *receive access rights request* step 44, the access control server 3 receives an access right request comprising the authentication data.

In an optional *authentic(ate) request* step 45, the access control server 3 authenticates the access right request by verifying the authentication data of the access right request, e.g. by verifying that the authentication data of the access right request 23 matches the authentication data that was included in the authentication data message 22. Optionally, in the authenticating the access right request, the access control server 3 verifies that it is the first time that the authentication data is used for authentication of an access right request by the access control server. This prevents a replay attack based if an attacker somehow would gain access to the authentication data of the authentication data message 22. In this case, if it is the first time that the authentication data is used for verification, the method proceeds and the access control server 3 stores an indication that the authentication data has now been used for verification. If it is not the first time that the authentication data is used for verification (which is determined by finding an indication that the authentication data has been previously used for a verification), the method ends.

In the *obtain access list* step 46, the access control server 3 optionally obtains the access list based on the space indicator. In this case, the access list comprises access rights for a plurality of electronic locks that need to be unlocked for access to the restricted physical space associated with the space indicator. For instance, to gain access to a particular flat, you may need to use a first credential to gain access to the building and a second credential to gain access to the flat, as illustrated by Fig 2 and explained above.

After the *obtain access list* step 46, the procedure can follow what is illustrated by Fig 3A, described above.

Looking now to Fig 3C, this illustrates a separate procedure for sharing lock data. This procedure can be executed in a separate execution context (e.g. separate process, thread, etc.) or can be included at an appropriate point in the procedures illustrated by Fig 3A and/or Fig 3B.

In an optional *transmit lock data* step 143, the access provision server 4 transmits lock data 25 for each electronic lock that is associated with an access right of the access list. Each such access right is coupled to at least one credential that is obtained in the *obtain credential(s)* step 142. The lock data can comprise information whether the lock is associated with the access control server that the access provision server 4 is in communication with. The access provision server 4 keeps information about electronic locks, such as what party is responsible for the electronic lock, in the form of an association between each lock and an access control server. Other parts of the lock data 25 can include lock model, current firmware version, indication if firmware should be upgraded and battery status.

In an optional *receive lock data* step 49, the access control server 3 receives the lock data 25 for at least one lock associated with an access right of the access list.

A couple of use cases will now be described to illustrate how embodiments presented herein can be exploited.

A first use case relates to home care for elderlies. A first care organisation is responsible for providing home care to a care recipient. Regardless of whether the home is a flat or a house, the home is a restricted physical space 16. The first care organisation has installed electronic locks in the homes of all care recipients. When caregiver personnel of the care organisation start a shift, the methods described can be used to allow the caregiver to be given all credentials according to an access list based on all restricted physical spaces that may be needed to access during the shift. The first organisation is coupled to an instance of the access control server 3. However, for night personnel, a second care organisation is used. This can be due to a situation where several different nearby care organisations share the load of providing home care during the night, which can also vary over time. The second care organisation is coupled to its own instance of the access control server 3. The access provision server 4 can be maintained by a separate organisation that is in control of the electronic locks 12. In any case, the embodiment presented herein allow flexible assignment of access rights using the access lists, allowing night personnel of the second care organisation to be provided with delegated access rights to restricted spaces normally accessed by the first care organisation.

A second use case relates to temporary access for emergency situations. Using embodiments illustrated by Fig 3B, emergency personnel that are dispatched to handle an emergency and who need access to a restricted physical space, can be provided with the needed credentials to a credential carrier 2, such as a smart phone. The emergency personnel are directed by a deep link to install the dedicated app if needed. In this way, any person with a credential carrier 2 can conveniently and securely be provided with temporary access. A variant of the second use case is to allow temporary access e.g. for deliveries, cleaners, handymen, etc.

A third use case illustrates the flexibility in assigning access to electronic lock. A first care recipient in a first flat in a building is served by a first care organisation. In order to gain access to the first flat, an access list for a caregiver employee of the first care organisation contains an access right for an electronic lock of a main door to get into the building and an access right for an electronic lock to get into the first flat. A second care recipient in a second flat in the same building is served by a second care organisation. In order to gain access to the second flat, an access list for a caregiver employee of the second care organisation contains an access right for the electronic lock of the main door to get into the building and an access right for an electronic lock to get into the second flat. This is conveniently accomplished using the access list management provided by embodiments presented herein. It is to be noted that access rights for the electronic lock for the main door of the building is then provided both to the first care organisation and the second care organisation. The first care organisation and the second care organisation have their own instances of access control servers 3.

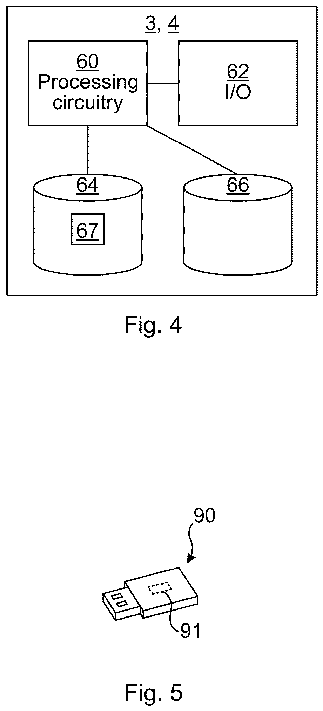

Fig 4 is a schematic diagram illustrating components of the access control server 3 and the access provision server 4 of Fig 1. Processing circuitry 60 is provided using any combination of one or more of a suitable central processing unit (CPU), graphics processing unit (GPU), multiprocessor, neural processing unit (NPU), microcontroller, digital signal processor (DSP), etc., capable of executing software instructions 67 stored in memory circuitry 64, which can thus be a computer program product. The processing circuitry 60 could alternatively be implemented using an application specific integrated circuit (ASIC), field programmable gate array (FPGA), etc. The processing circuitry 60 can be configured to execute the methods described with reference to Figs 3A-C above.

The memory circuitry 64 can be any combination of random-access memory (RAM) and/or read-only memory (ROM). The memory circuitry 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processing circuitry 60. The data memory 66 can be any combination of RAM and/or ROM.

An I/O interface 62 is provided for communicating with external and/or internal entities. Optionally, the I/O interface 62 also includes a user interface.

Other components are omitted in order not to obscure the concepts presented herein.

Fig 5 shows one example of a computer program product 90 comprising computer readable means. On this computer readable means, a computer program 91 can be stored in a non-transitory memory. The computer program can cause processing circuitry to execute a method according to embodiments described herein. In this example, the computer program product 90 is in the form of a removable solid-state memory, e.g. a Universal Serial Bus (USB) drive. As explained above, the computer program product could also be embodied in a memory of a device, such as the computer program product 64 of Fig 4. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

Here now follows a set of embodiments enumerated with roman numerals.
i. A method for enabling the provision of credentials for electronic locks, the method being performed by a system comprising an access control server and an access provision server, wherein the access provision server is distinct from the access control server, the method comprising:
   receiving, by the access control server, an access provision request comprising an identifier of a credential carrier;
   obtaining, by the access control server, an access list indicating at least one access right for a restricted physical space to be provided to the credential carrier;
   transmitting, by the access control server, an access preparation message to the access provision server, the access preparation message comprising the access list;
   transmitting, by the access control server, an access list message comprising the access list and/or an identifier associated with the access list, to the credential carrier;
   receiving, by the access provision server, from the credential carrier, a credential request, the credential request comprising the access list and/or the identifier associated with the access list;
   obtaining, by the access provision server, at least one credential corresponding to the access list; and
   providing, by the access provision server, a credential message, comprising the at least one credential corresponding to the access list, to the credential carrier.
ii. A method for enabling the provision of credentials for electronic locks, the method being performed by an access control server, the method comprising:
   receiving an access provision request comprising an identifier of a credential carrier;
   obtaining an access list indicating at least one access right for a restricted physical space to be provided to the credential carrier;
   transmitting an access preparation message to an access provision server being distinct from the access control server, the access preparation message comprising the access list; and
   transmitting an access list message comprising the access list and/or an identifier associated with the access list to the credential carrier.
iii. The method according to embodiment ii, wherein in the obtaining the access list the access list is obtained based on the identifier of the credential carrier.
iv. The method according to embodiment ii or iii, further comprising:
   receiving lock data for at least one lock associated with an access right of the access list.
v. The method according to embodiment iv, wherein the lock data comprises information whether the lock is associated with the access control server.
vi. The method according to any one of embodiments ii to v, wherein the access provision request further comprises a space indicator being associated with a restricted physical space to be accessed by the credential carrier; the access list comprises at least one access right for accessing the restricted physical space; the method further comprising:
   transmitting an authentication data message, comprising authentication data, to the credential carrier;
   receiving an access right request comprising the authentication data; and
   authenticating the access right request by verifying the authentication data of the access right request.
vii. The method according to embodiment vi, wherein the obtaining the access list further comprises obtaining, the access list based on the space indicator, wherein the access list comprises access rights for a plurality of electronic locks that need to be unlocked for access to the restricted physical space associated with the space indicator.
viii. The method according to embodiment vi or vii, wherein the transmitting the authentication data message comprises providing the authentication data message as a text message or an e-mail to the credential carrier.
ix. The method according to any one of embodiments vi to viii, wherein the authenticating the access right request comprises verifying that it is the first time that the authentication data is used for authentication of an access right request by the access control server.
x. An access control server for enabling the provision of credentials for electronic locks, the access control server comprising:
   processing circuitry; and
   memory circuitry storing instructions that, when executed by the processing circuitry, cause the access control server to:
      receive an access provision request comprising an identifier of a credential carrier;
      obtain an access list indicating at least one access right for a restricted physical space to be provided to the credential carrier;
      transmit an access preparation message to an access provision server being distinct from the access control server, the access preparation message comprising the access list; and
      transmit an access list message comprising the access list and/or an identifier associated with the access list to the credential carrier.
xi. A computer program for enabling the provision of credentials for electronic locks, the computer program comprising computer program code which, when executed on a access control server causes the access control server to:
   receive an access provision request comprising an identifier of a credential carrier;
   obtain an access list indicating at least one access right for a restricted physical space to be provided to the credential carrier;
   transmit an access preparation message to an access provision server being distinct from the access control server, the access preparation message comprising the access list; and
   transmit an access list message comprising the access list and/or an identifier associated with the access list to the credential carrier.
xii. A computer program product comprising a computer program according to embodiment xi and a computer readable means comprising non-transitory memory in which the computer program is stored.
xiii. A method for enabling the provision of credentials for electronic locks, the method being performed by an access provision server, the method comprising:
   receiving an access preparation message from an access control server being distinct from the access provision server, the access preparation message comprising an access list indicating at least one access right to be provided to a credential carrier;
   receiving, from the credential carrier, a credential request, the credential request comprising the access list and/or an identifier associated with the access list; and
   obtaining at least one credential corresponding to the access list; and
   providing a credential message, comprising the at least one credential corresponding to the access list, to the credential carrier.
xiv. The method according to embodiment xiii, wherein the obtaining at least one credential comprises generating each one of the at least one credential based on secret data that is shared with the lock that is associated with the credential.
xv. The method according to embodiment xiii or xiv, further comprising:
   receiving lock data from the credential carrier.
xvi. The method according to any one of embodiments xiii to xv, further comprising verifying, for each access right of the access list, that the access control server is authorised to be provided that access right.
xvii.An access provision server for enabling the provision of credentials for electronic locks, the access provision server comprising:
   processing circuitry; and
   memory circuitry storing instructions that, when executed by the processing circuitry, cause the access provision server to:
      receive an access preparation message from an access control server being distinct from the access provision server, the access preparation message comprising an access list indicating at least one access right to be provided to a credential carrier;
      receive, from the credential carrier, a credential request, the credential request comprising the access list and/or an identifier associated with the access list;
      obtain at least one credential corresponding to the access list; and
      provide a credential message, comprising the at least one credential corresponding to the access list, to the credential carrier.
xviii. A computer program for enabling the provision of credentials for electronic locks, the computer program comprising computer program code which, when executed on a access provision server causes the access provision server to:
   receive an access preparation message from an access control server being distinct from the access provision server, the access preparation message comprising an access list indicating at least one access right to be provided to a credential carrier;
   receive, from the credential carrier, a credential request, the credential request comprising the access list and/or identifier associated with the access list;
      obtain at least one credential corresponding to the access list; and
      provide a credential message, comprising the at least one credential corresponding to the access list, to the credential carrier.
xix. A computer program product comprising a computer program according to embodiment xviii and a computer readable means comprising non-transitory memory in which the computer program is stored.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for enabling the provision of credentials for electronic locks (12), the method being performed by a system (1) comprising an access control server (3) and an access provision server (4), wherein the access provision server (4) is distinct from the access control server (3), the method comprising:
receiving (40), by the access control server (3), an access provision request comprising an identifier of a credential carrier (2);
obtaining (46), by the access control server (3), an access list indicating at least one access right for a restricted physical space to be provided to the credential carrier (2);
transmitting (48), by the access control server (3), an access preparation message (24) to the access provision server (4), the access preparation message comprising the access list;
transmitting (50), by the access control server (3), an access list message (26) comprising the access list and/or an identifier associated with the access list, to the credential carrier (2);
receiving (144), by the access provision server (4), from the credential carrier (2), a credential request (28), the credential request (28) comprising the access list and/or the identifier associated with the access list;
obtaining (145), by the access provision server (4), at least one credential corresponding to the access list; and
providing (146), by the access provision server (4), a credential message (30), comprising the at least one credential corresponding to the access list, to the credential carrier (2).

2. A method for enabling the provision of credentials for electronic locks (12), the method being performed by an access control server (3), the method comprising:
receiving (40) an access provision request comprising an identifier of a credential carrier (2);
obtaining (46) an access list indicating at least one access right for a restricted physical space to be provided to the credential carrier (2);
transmitting (48) an access preparation message (24) to an access provision server (4) being distinct from the access control server (3), the access preparation message comprising the access list; and
transmitting (50) an access list message (26) comprising the access list and/or an identifier associated with the access list to the credential carrier (2).

3. The method according to claim 2, wherein in the obtaining (46) the access list, the access list is obtained based on the identifier of the credential carrier (2).

4. The method according to claim 2 or 3, further comprising:
receiving (49) lock data for at least one lock associated with an access right of the access list.

5. The method according to any one of claims 2 to 4, wherein the access provision request further comprises a space indicator (7) being associated with a restricted physical space (16, 16-b) to be accessed by the credential carrier (2); the access list comprises at least one access right for accessing the restricted physical space (16, 16-b); the method further comprising:
transmitting (42) an authentication data message (21), comprising authentication data (22), to the credential carrier (2);
receiving (44) an access right request (24) comprising the authentication data; and
authenticating (45) the access right request (24) by verifying the authentication data of the access right request (24).

6. The method according to claim 5, wherein the obtaining (46) the access list further comprises obtaining the access list based on the space indicator (7), wherein the access list comprises access rights for a plurality of electronic locks that need to be unlocked for access to the restricted physical space (16, 16-b) associated with the space indicator (7).

7. The method according to claim 5 or 6, wherein the authenticating (45) the access right request (24) comprises verifying that it is the first time that the authentication data is used for authentication of an access right request (24) by the access control server (3).

8. An access control server (3) for enabling the provision of credentials for electronic locks (12), the access control server (3) comprising:
processing circuitry (60); and
memory circuitry (64) storing instructions (67) that, when executed by the processing circuitry, cause the access control server (3) to:
receive an access provision request comprising an identifier of a credential carrier (2);
obtain an access list indicating at least one access right for a restricted physical space to be provided to the credential carrier (2);
transmit an access preparation message (24) to an access provision server (4) being distinct from the access control server (3), the access preparation message comprising the access list; and
transmit an access list message (26) comprising the access list and/or an identifier associated with the access list to the credential carrier (2).

9. A computer program (67, 91) for enabling the provision of credentials for electronic locks (12), the computer program comprising computer program code which, when executed on a access control server (3) causes the access control server (3) to:
receive an access provision request comprising an identifier of a credential carrier (2);
obtain an access list indicating at least one access right for a restricted physical space to be provided to the credential carrier (2);
transmit an access preparation message (24) to an access provision server (4) being distinct from the access control server (3), the access preparation message comprising the access list; and
transmit an access list message (26) comprising the access list and/or an identifier associated with the access list to the credential carrier (2).

10. A computer program product (64, 90) comprising a computer program according to claim 9 and a computer readable means comprising non-transitory memory in which the computer program is stored.

11. A method for enabling the provision of credentials for electronic locks (12), the method being performed by an access provision server (4), the method comprising:
receiving (140) an access preparation message (24) from an access control server (3) being distinct from the access provision server (4), the access preparation message comprising an access list indicating at least one access right to be provided to a credential carrier (2);
receiving (144), from the credential carrier (2), a credential request (28), the credential request (28) comprising the access list and/or an identifier associated with the access list; and
obtaining (145) at least one credential corresponding to the access list; and
providing (146) a credential message (30), comprising the at least one credential corresponding to the access list, to the credential carrier (2).

12. The method according to claim 11, wherein the obtaining (145) at least one credential comprises generating each one of the at least one credential based on secret data that is shared with the lock that is associated with the credential.

13. An access provision server (4) for enabling the provision of credentials for electronic locks (12), the access provision server (4) comprising:
processing circuitry (60); and
memory circuitry (64) storing instructions (67) that, when executed by the processing circuitry, cause the access provision server (4) to:
receive an access preparation message (24) from an access control server (3) being distinct from the access provision server (4), the access preparation message comprising an access list indicating at least one access right to be provided to a credential carrier (2);
receive, from the credential carrier (2), a credential request (28), the credential request (28) comprising the access list and/or an identifier associated with the access list;
obtain at least one credential corresponding to the access list; and
provide a credential message (30), comprising the at least one credential corresponding to the access list, to the credential carrier (2).

14. A computer program (67, 91) for enabling the provision of credentials for electronic locks (12), the computer program comprising computer program code which, when executed on a access provision server (4) causes the access provision server (4) to:
receive an access preparation message (24) from an access control server (3) being distinct from the access provision server (4), the access preparation message comprising an access list indicating at least one access right to be provided to a credential carrier (2);
receive, from the credential carrier (2), a credential request (28), the credential request (28) comprising the access list and/or identifier associated with the access list;
obtain at least one credential corresponding to the access list; and
provide a credential message (30), comprising the at least one credential corresponding to the access list, to the credential carrier (2).

15. A computer program product (64, 90) comprising a computer program according to claim 14 and a computer readable means comprising non-transitory memory in which the computer program is stored.
